# EUROPEAN PATENT SPECIFICATION

(11) **EP 1 997 096 B1**
(45) Date of publication and mention of the grant of the patent: **10.12.2014**
(21) Application number: 07713467.4
(22) Date of filing: 23.02.2007
(51) Int. Cl.: A61C 5/02, A61C 19/00, G09B 23/28, A61C 19/04

(54) **ENDODONTIC TRAINING DEVICE AND RELATIVE METHOD OF UTILIZATION**
WURZELKANAL-TRAININGSGERÄT UND ENTSPRECHENDES VERWENDUNGSVERFAHREN
DISPOSITIF D'ENTRAINEMENT ENDODONTIQUE ET PROCEDE ASSOCIE D'UTILISATION

(30) Priority: 17.03.2006 IT BS20060063
(43) Date of publication of application: 03.12.2008
(73) Proprietor: Tonini, Riccardo, 25123 Brescia (IT)
(72) Inventor: Tonini, Riccardo, 25123 Brescia (IT)
(74) Representative: Pulieri, Gianluca Antonio
(86) International application number: PCT/IT2007/000128
(87) International publication number: WO 2007/108030

(56) References cited:
- DE-U1- 29 505 884
- DE-U1-202005 008 965
- US-A- 4 102 047
- US-A1- 2002 164 568
- US-A1- 2004 191 739
- US-B1- 6 926 532

## Description

The present invention relates to an endodontic training device and the relative method of utilization.

Particularly, the present invention applies to those devices that are suitable to determine the depth or length of tooth canals by identifying the apex of the tooth canals.

Apex locating devices are known in the art, which are used directly on the patient and comprise a pair of clamps that provide a positive pole and a negative pole on the patient. One of these clamps is connected to the patient's jaw such that the electric circuit can be closed on the patient.

The dentist can then carry out the shaping or reaming of the canal proceeding by trial and error, when the root apex is reached, the circuit will be electrically closed on the patient due to the terminal connected to the jaw, and the device will signal that the apex has been reached.

These known devices, however, provide directly practicing on the patient, i.e. they are "in vivo" devices and thus do not allow carrying out "safe" training.

Accordingly, devices have been developed for "in vitro" training, which allow the dentist to train on a tooth being arranged within a particular container; thereby, a direct action on the patient can be avoided.

These known devices, however, do not allow a rapidly checking the operation of exploring the canal and the subsequent plugging of the latter with specific materials, the training step thus resulting however slow and laborious.

The problem of the present invention is to provide an endodontic training device, which solves the drawbacks mentioned with reference to the prior art.

These drawbacks and limitations are solved by means of a device in accordance with claim 1 and a method in accordance with claim 16.

Other embodiments of the device according to the invention are as described in the claims below.

Further characteristics and the advantages of the present invention will be better understood from the description given below of the preferred but not limiting embodiments thereof, wherein:
Fig. 1 is a perspective view of an endodontic training device according to an embodiment of the present invention;

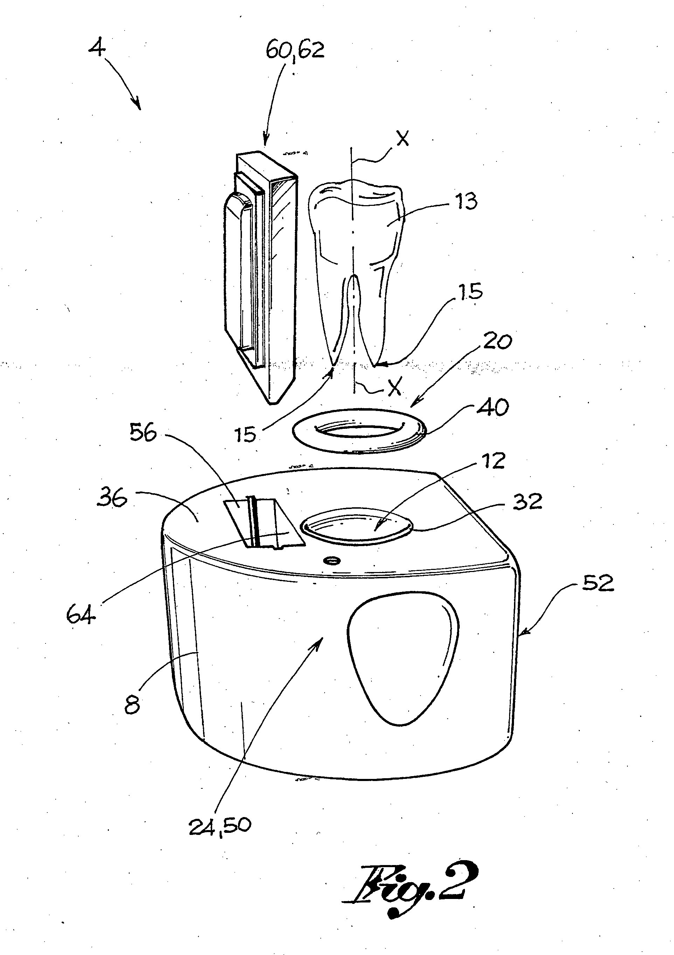

Fig. 2 represents a cut-away view of the device in Fig. 1;
Fig. 3 is a perspective view of the device in Fig. 1 according to a further embodiment of the present invention;
Fig. 4 is a plan top view of the device in Fig. 1 according to a further embodiment of the present invention;
Fig. 5 is a perspective view of the device in Fig. 1 during a step of endodontic training;
Fig. 6 is a perspective view of an endodontic training device according to a further embodiment of the present invention;
Fig. 7 is a perspective view of the device in Fig. 6, in a tooth mounting configuration;
Fig. 8 is a perspective view of the device in Fig. 6 from a different point of view;
Fig. 9 is a perspective view of a detail of the device in Fig. 6;
Fig. 10 is a sectional view of the device in Fig. 7, in a tooth mounting configuration.

The elements or parts of elements in common throughout the embodiments described below will be indicated with the same numerical references.

With reference to said figures, an endodontic training device has been generally designated with 4.

This device 4 comprises a device body 8, which encloses a housing seat 12, suitable to at least partially house a tooth 13. The tooth 13 comprises a plurality of canals 14, each ending in a respective apex 15. According to an embodiment, the housing seat 12 is defined by a tubular body 16, for example cylindrical, which extends from an upper wall 36 of the device to a base 17 of the device.

According to a further embodiment, the device 4 comprises a socket 18, which is preferably arranged co-axial to said tubular body 16, such as to form together with the outer side wall of the tubular body 16 an annular seat 19, which is suitable to collect cleaning fluids of the tooth. For example, a small sponge can be inserted within said annular seat 19 to allow the absorption of said cleaning fluids. Preferably, the socket 18 is removably associated with a hole 21 that is formed on the base 17 of the device 4; for example, the socket 18 is fixed within the hole 21 by means of a bayonet-coupling. According to an embodiment, the socket 18 is mechanically separated from the tubular body 16; according to a further embodiment, the socket 18 is integral with the tubular body 16 such that, when the socket 18 is removed, the tubular body 16 is also removed.

The device 4 comprises locking means 20 of the tooth 13 relative to the housing seat 12 and electric connection means 24 between the tooth 13 and an electric terminal 28 suitable to close an electric circuit with suitable clamps (not shown) that are associated with the device for endodontic training 4.

The electric terminal 28 can be arranged, for example, on an outer side wall of the device body 8 such as to be accessed by the electric connection clamps.

According to an embodiment, the locking means 20 comprise a collar 32 suitable to at least partially accommodate the tooth 13. According to an embodiment, said collar 32 is cylindrical and develops from the upper wall 36 of the device body 8 according to a direction parallel to the main direction of extension X of the associable tooth 13.

According to an embodiment, a ring 40 is associated with said collar 32, which is suitable to lock the tooth 13 in position on the collar.

Preferably, said ring 40 is made of a plastic bicomponent impression material.

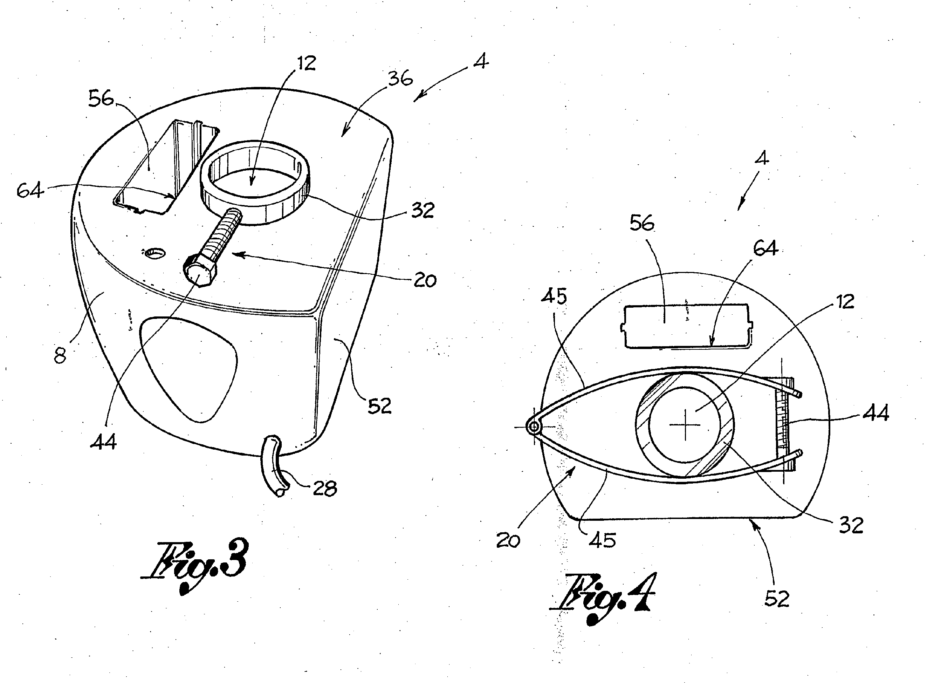

The locking means 20 can also comprise screw means 44 associated with said collar 32 and suitable to lock the tooth 13 in position on the collar 32 (Fig. 3).

According to a further embodiment (Fig. 4) the locking means 20 comprise a pair of tabs 45 that are suitable to tighten the tooth 13 such as to lock the tooth 13 in position relative to the collar 32 and relative to said upper wall 36.

Preferably, the collar 32 is pivotally mounted relative to the device body 8, such as to allow the tooth 13 to rotate relative to said vertical axis X, as well as perpendicular to said upper wall 36.

Advantageously, the collar 32 comprises notches (not illustrated), which are suitable to allow an elastic deformation of the collar 32 when closing relative to the tooth 13. Thereby, the locking of the tooth 13 on the collar 32 is, for example, facilitated by tightening the tabs 45.

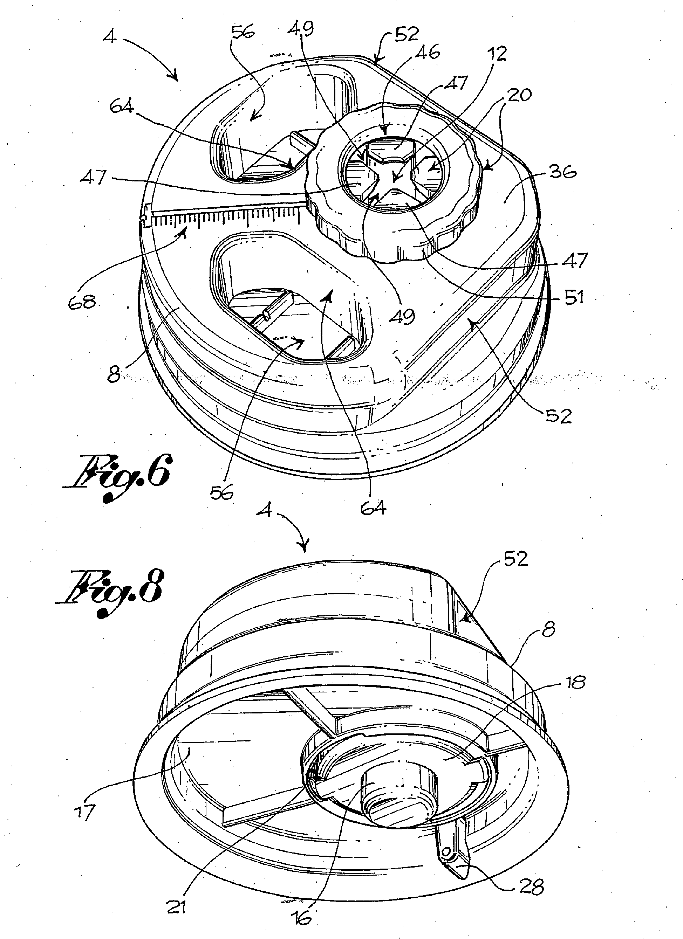

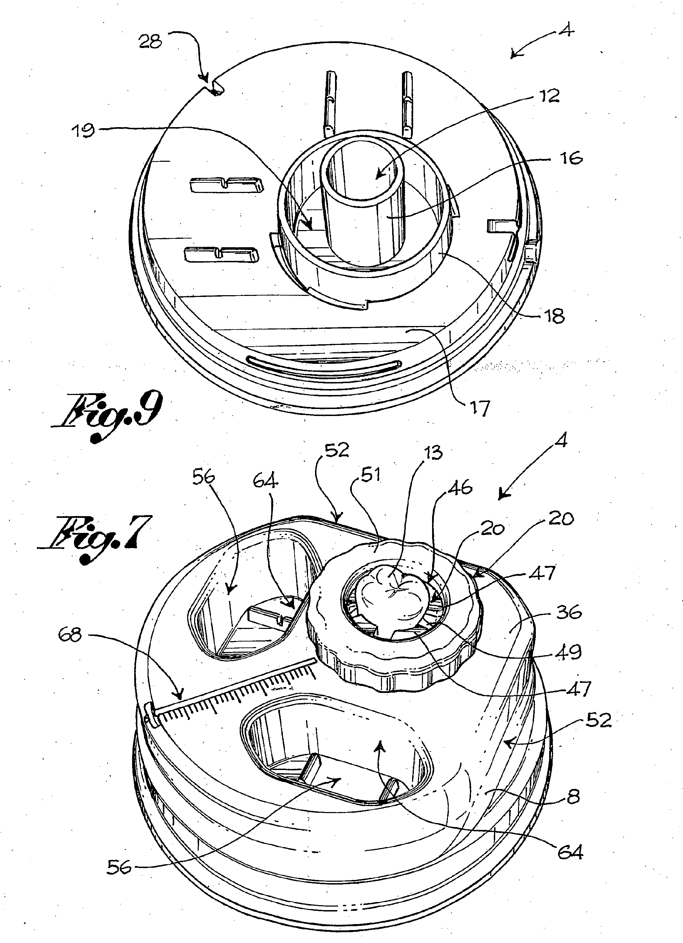

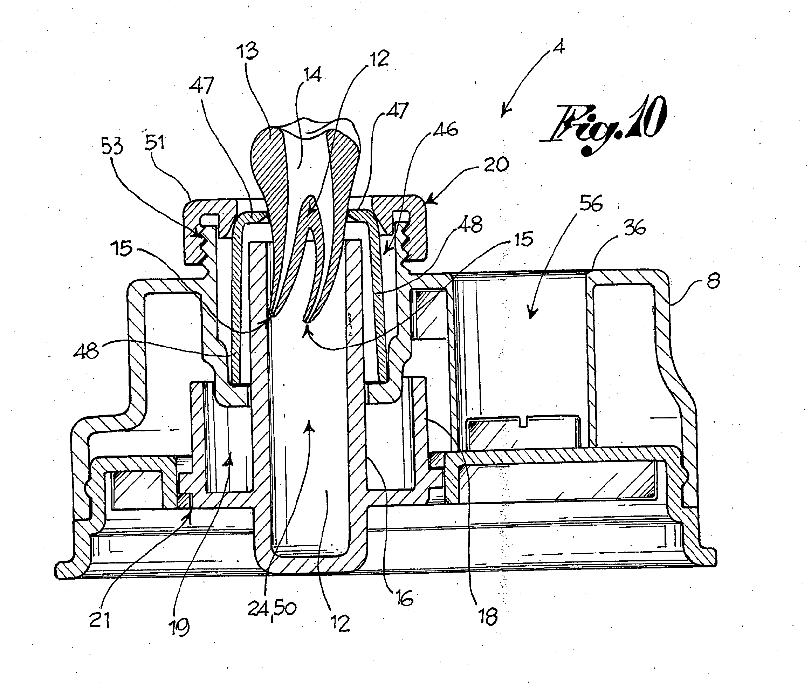

According to a further embodiment of the present invention (Fig. 6,7,10), the locking means 20 comprise a clamp device 46, which is arranged for example co-axial to said collar 32, said clamp device 46 preferably comprising at least two counter-posed fingers 47, which are suitable to tighten a tooth 13 interposed therebetween.

Preferably, the clamp device 46 comprises four fingers 47, which are angularly arranged paced from each other and elastically connected to a bush 48, for example by providing suitable notches 49.

According to an embodiment, the locking means 20 comprise a ring nut 51 suitable to be screwed on an outer threading 53 of said collar 32. As the ring nut 51 is tightened on the outer threading 53 of collar 32, it carries out an action of radial compression on the fingers 47 of the clamp device 46, which tighten on the tooth 13 thus locking the latter in position within the housing seat 12.

Advantageously, the electrical connection means 24 comprise a conductive gel 50 suitable to provide an electric connection between the tooth 13 and the terminal 28. Said gel at least partially fills the housing seat 12 and is in contact with said terminal 28, such as to electrically connect the tooth 13 with the terminal 28.

Advantageously, the housing seat 12 of the tooth is provided with at least one radio-transparent wall 52 and the device 4 comprises at least one imaging chamber 56 that is arranged, relative to the tooth 13, opposite said radio-transparent wall 52, such as to be capable of printing a radiograph of the tooth on imaging media 60, such as a photographic plate or digital imaging device 62 that are housed within the at least one imaging chamber 56, by irradiating the device and tooth 13 on the side of the radio-transparent wall 52.

According to an embodiment, the device 4 comprises two imaging chambers 56 that are arranged at 90 degrees to each other relative to the tooth, such as to allow carrying out two radiographs of the tooth 13 in perpendicular directions relative to each other without being obliged to rotate the tooth 13 relative to the housing seat 12.

Particularly, according to an embodiment, the radio-transparent wall 52 of the housing seat 12 is a flat wall and is an outer wall of the device body 8.

Said radio-transparent wall 52 is, for example, made of a plastic material.

The imaging chamber 56 comprises a recess suitable to house a photographic plate or a digital imaging device 60 according to a shape-, preferably fitting-coupling.

Preferably, the recess is defined, on the side of the housing seat 12 of the associable tooth 13, by an irradiation panel 64, which is also radio-transparent.

Preferably, the irradiation panel 64 is substantially flat and parallel to said radio-transparent wall 52.

According to an embodiment, at an upper wall of the device body there is provided a millimetre measurement scale 68 to allow exactly measuring the depth of the canals of tooth 13.

The method for endodontic training according to the present invention will be now described.

The endodontic training device according to the present invention is used for training in the operations of cleaning and shaping tooth roots and a subsequent plugging the latter with specific materials.

This training consists in the operation of cleaning and shaping of the roots of a sample tooth by means of suitable endodontic files.

The target of the operation is to completely shape the roots all over the length thereof without going beyond the apex of the roots. Accordingly, it is crucial using a tool being capable of warning the dentist that the apex has been reached by the endodontic tools.

The device according to the invention is used together with an apex locator, such as of a known type, which comprises a metallic endodontic tool that is connected to a first conductive clamp by means of a control unit.

A second conductive clamp, also connected to the same control unit, is fixed to the electric terminal 28 of the device body 8.

The conductive gel 50 provides an electrical continuity between the tooth 13 and the conductive terminal 28.

When the endodontic tool reaches the root apex 15, it comes in contact with the gel and the electrical circuit between the two clamps is thus closed. The closure is detected by the control unit, such as by means of a sound or visual signal.

The method for endodontic training according to the present invention comprises the steps of placing a tooth 13 on an endodontic training device by first inserting the photographic imaging media 60 within the imaging chambers 56.

During any step of shaping, cleaning, (even partial) plugging the canal 14 of tooth 13, a radiography of the tooth can be carried out such as to view the interior of the canal 14.

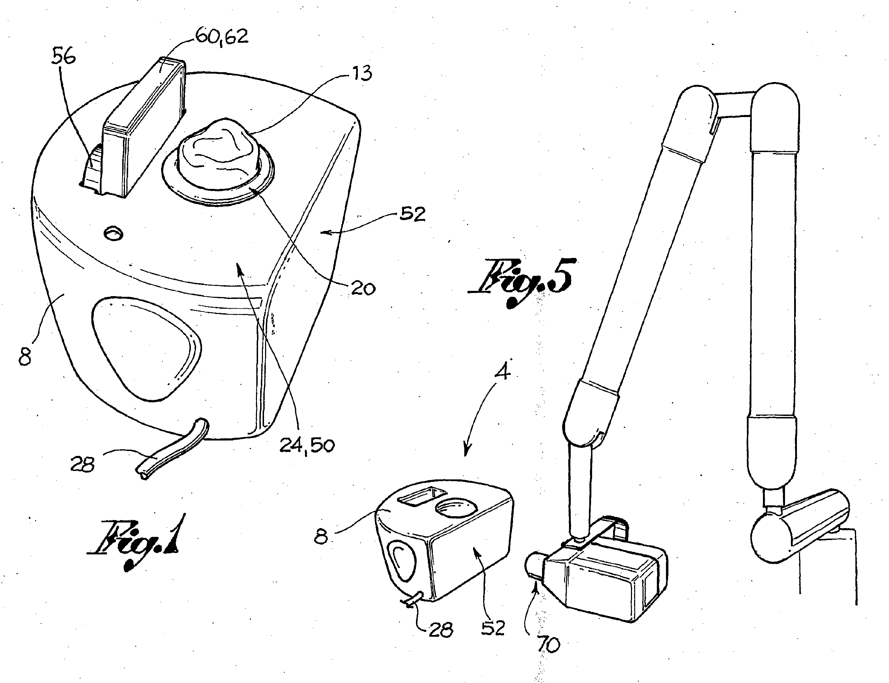

To the purpose, a radiating source 70 is applied proximate to the radio-transparent walls 52, such as by means of a mobile equipment for plates provided with a moving articulated arm (Fig. 5)

Preferably, the radiating source 70 is brought in contact with said radio-transparent wall 52.

The contact between the flat radiating source and the radio-transparent wall 52, also flat, ensures that the tooth and thus the plate that can be obtained are evenly irradiated.

The tooth is first irradiated on the side of the radio-transparent wall, such that an intrabuccal radiograph is obtained on the imaging media 60.

Advantageously, the rays emitted from the radiating source first meet the thickness of the radio-transparent wall 52 that is even and constant throughout the extension of the wall; which is flat.

The rays then pass through the tooth 13 and the portion of gel 50 that wraps the latter in a substantially even manner. The rays impinge on the irradiating panel 64, which is, in turn, even, flat and of constant thickness, and print the photographic imaging media 60.

As the thicknesses of the radio-transparent wall 52 and irradiating panel 64 are even and constant, the X-rays emitted from the radiating source are not required to pass through different thicknesses and thus a particularly sharp and even image can be obtained.

After a first photographic plate has been carried out, the tooth 13 can be rotated with the collar 32 such as to take all photographic images of the tooth from different points of view, without being ever forced to dismount the tooth from the housing seat 12 thereof. Using a device provided for example with two imaging chambers 56 being arranged for example at 90° relative to each other, two radiographs can also be carried out without the tooth requiring to be dismounted or rotated.

After the canal 14 has been shaped and cleaned, it can be further plugged with specific materials. This operation can also be monitored by means of one or more radiographs in order to check the plugging level of canal 14 and the accuracy of the plugging operation.

As may be appreciated from what has been described above, the training device according to the invention allows overcoming the drawbacks occurring in the prior art.

Particularly, the device, after the tooth has been fixed in position allows carrying out the operations of shaping and cleaning canal 14 and the subsequent plugging of canal 14 without ever being required to act on the patient.

Furthermore, the device allows carrying out radiographs of the tooth throughout the partial steps of shaping, cleaning, plugging of the latter, without ever. being required to dismount the tooth from the fixing means thereof.

Furthermore, the tooth can be also rotated relative to the device such as to be capable of carrying out intrabuccal radiographs from all sides of the tooth without ever being required to dismount the tooth from the retainers thereof. Furthermore, at least two radiographs can be carried out from different points of view without being required to rotate the tooth, but instead using a device comprising at least two imaging chambers 56 that are arranged at 90° relative to each other, for example.

The device further allows obtaining a uniformity of definition of the radiographic image due to the fact that the thicknesses interposed between the radiating source and the photographic plate are constant. These thicknesses can be obtained constant due to the fact that the radio-transparent wall and the irradiating panel are flat and parallel to each other, and thus also equidistant.

Accordingly, the X-ray beam impinging on the tooth must pass through the same wall thicknesses before printing the photographic imaging media.

Thereby, clearer and more readable radiographic images can be obtained.

Furthermore, using the gel for radiographies, the device for endodontic training can be easily transported without running the risk that conductive liquid substances may leak out, this being the case with several prior art devices in which saline is used.

Those skilled in the art, in order to meet contingent and specific requirements, will be able to make a number of modifications and variants to the devices described above, all being however contemplated within the scope of protection the invention as defined by the following claims.

## Claims

1. An endodontic training device (4) comprising a device body (8) enclosing a housing seat (12) for a tooth (13)
means (20) for locking the tooth (13) relative to the housing seat (12)
electric connection means (24) between the tooth (13) and an electrical terminal (28)
**characterized in that**
the housing seat (12) of the tooth (13) is provided with at least one radio-transparent wall (52) and
the device (4) comprises at least one imaging chamber (56) that is arranged, relative to the tooth (13), opposite said radio-transparent wall (52), such as to be capable of printing a radiograph of the tooth (13) on imaging media (60) housed within said at least one imaging chamber (56) by irradiating the device (4) on the radio-transparent wall (52) side.

2. The device (4) according to claim 1, wherein said at least one radio-transparent wall (52) of the housing seat (12) is a flat wall.

3. The device (4) according to claim 2, wherein said radio-transparent wall (52) is an outer wall of the body device (8).

4. The device (4) according to claim 1, 2, or 3, wherein the at least one imaging chamber (56) comprises a recess suitable to house the imaging media (60, 62) according to a shape-coupling.

5. The device (4) according to claim 4, wherein said recess is defined, on the side of the housing seat (12) of the tooth associable therewith (13), by a radio-transparent irradiating panel (64).

6. The device (4) according to claim 4 or 5, wherein said irradiating panel (64) is substantially flat relative to said radio-transparent wall (52).

7. The device (4) according to any claim 1 to 6, wherein the device (4) comprises two imaging chambers (56) that are arranged at 90 degrees to each other relative to the tooth (13), such as to allow carrying out two radiographs of the tooth (13) in perpendicular directions relative to each other without being obliged to rotate the tooth (13) relative to the housing seat (12).

8. The device (4) according to any claim 1 to 7, wherein the locking means (20) comprise a collar (32) that is suitable to accommodate the tooth (13).

9. The device (4) according to claim 8, wherein a ring (40) is associated with said collar (32), which is suitable to lock the tooth (13) in position on the collar (32).

10. The device (4) according to claim 9, wherein said ring (40) is made of a bicomponent plastic material for impressions.

11. The device (4) according to claim 8, wherein the locking means (20) comprise screw means (44), associated with said collar (32) and suitable to lock the tooth (13) in position on the collar (32).

12. The device (4) according to claim 11, wherein said locking means (20) comprise a pair of tabs (45) suitable to tighten the tooth (13) such as to lock the tooth (13) in position relative to the collar (32).

13. The device (4) according to any claim 8 to 12, wherein said collar (32) is pivotally mounted relative to the device body (8), such as to allow the rotation of tooth (13) relative to a vertical axis (x) that is substantially directed parallel to a main direction of extension of the tooth (13).

14. The device (4) according to any claim 8 to 13, wherein said collar (32) comprises notches suitable to allow an elastic deformation of the collar (32) while closing relative to the tooth (13).

15. The device (4) according to any claim 1 to 14, wherein the locking means (20) comprise a clamp device (46) being provided with at least two counter-posed fingers (47) suitable to tighten a tooth (13) being interposed therebetween.

16. The device (4) according to claim 15, wherein said clamp device (46) is arranged co-axial to said collar (32).

17. The device (4) according to claim 15 or 16, wherein the clamp device (46) comprises four fingers (47) that are arranged angularly paced from each other.

18. The device (4) according to claim 15, 16 or 17, wherein said fingers (47) are elastically connected to a bush (48) by providing suitable notches (49).

19. The device (4) according to any claim 15 to 18, wherein the locking means (20) comprise a ring nut (51) suitable to be screwed on an outer threading (53) of said collar (32), said ring nut (51) applying an action of radial compression on the fingers (47) while the collar (32) is screwed on said outer threading (53).

20. The device (4) according to any preceding claim, wherein said housing seat (12) is defined by a tubular body (16), extending from an upper wall (36) of the device to a base (17) of the device.

21. The device according to claim 20, comprising a socket (18), which is arranged co-axial to said tubular body (16), such as to form together with the outer side wall of the tubular body (16) an annular seat (19), which is suitable to collect cleaning fluids of the tooth.

22. The device according to claim 21, wherein the socket (18) is removably associated with a hole (21) formed on the base (17) of the device (4).

23. The device according to claim 22, wherein fixing the socket (18) to the hole (21) is carried out by means of a bayonet coupling.

24. The device according to any claim 21 to 23, wherein the socket (18) is mechanically separated from the tubular body (16).

25. The device according to any claim 21 to 23, wherein the socket (18) is integral with the tubular body (16) such that, when the socket (18) is removed, the tubular body (16) is also removed.

26. The device (4) according to any preceding claim, wherein said electrical connection means (24) comprise a conductive gel (50) suitable to carry out an electrical connection between the tooth (13) and terminal (28).

27. The device (4) according to claim 26, wherein said gel (50) at least partially fills the housing seat (12) and contacts said terminal (28), such as to electrically connect the tooth (13) with the terminal (28).

28. The device (4) according to any preceding claim, wherein a measurement scale (68) is provided at an upper wall (36) of the device body, in order to allow exactly measuring the depth of the canals of tooth (13).

29. A method for endodontic training comprising the steps of:
- placing a tooth (13) on an endodontic training device (4) according to any claim 1 to 28,
connecting first connection clamp to a shaping device for canal (14) of tooth (13) and second connection clamp to said electrical terminal (28),
at least partially filling the housing seat (12) of the tooth (13) with an electrical connection means (24).

30. The method for endodontic training according to claim 29, comprising the steps of:
inserting the imaging media (60, 62) within said at least one imaging chamber (56)
applying a radiating source proximate to said at least one radio-transparent wall (52)
irradiating the tooth (13) on the side of said at least one radio-transparent wall (52) such as to obtain a radiograph intrabuccal on the imaging media (60, 62).

31. The method for endodontic training according to claim 29 or 30, comprising the step of:
rotating the tooth (13) relative to the housing seat (12) and carrying out a plurality of radiographs of the tooth (13) relative to different points of view.

32. The method for endodontic training according to claim 29 or 30, comprising the step of carrying out two radiographs without being required to dismount or rotate the tooth, by applying a radiating source proximate to two different radio-transparent walls (52).

33. The method for endodontic training according to any claim 29 to 32, comprising the steps of:
carrying out the shaping and cleaning of a canal (14) of the tooth (13) by means of a specific endodontic tool,
carrying out a plugging, with specific materials, of at least one canal (14) of the previously emptied tooth (13).

## Patentansprüche

1. Endodontische Trainingsvorrichtung (4), die aufweist:
einen Vorrichtungskörper (8), der einen Gehäusesitz (12) für einen Zahn (13) umgibt,
Mittel (20) zur Festsetzung des Zahns (13) relativ zu dem Gehäusesitz (12),
elektrische Verbindungsmittel (24) zwischen dem Zahn (13) und einem elektrischen Anschluss (28),
**dadurch gekennzeichnet, dass**
der Gehäusesitz (12) des Zahns (13) mit wenigstens einer röntgenstrahlendurchlässigen Wand (52) versehen ist und
die Vorrichtung (4) wenigstens eine Bildgebungskammer (56) aufweist, die relativ zu dem Zahn (13) der röntgenstrahlendurchlässigen Wand (52) gegenüberliegend angeordnet ist, um so in der Lage zu sein, ein Röntgenbild des Zahns (13) auf einem Bildgebungsmedium (60), das in der wenigstens einen Bildgebungskammer (56) aufgenommen ist, durch Bestrahlung der Vorrichtung (4) auf der Seite der röntgenstrahlendurchlässigen Wand (52) aufzuzeichnen.

2. Vorrichtung (4) nach Anspruch 1, wobei die wenigstens eine röntgenstrahlendurchlässige Wand (52) des Gehäusesitzes (12) eine flache Wand ist.

3. Vorrichtung (4) nach Anspruch 2, wobei die röntgenstrahlendurchlässige Wand (52) eine Außenwand des Vorrichtungskörpers (8) ist.

4. Vorrichtung (4) nach Anspruch 1, 2 oder 3, wobei die wenigstens eine Bildgebungskammer (56) eine Aussparung aufweist, die geeignet ist, um das Bildgebungsmedium (60, 62) entsprechend einer formschlüssigen Kopplung aufzunehmen.

5. Vorrichtung (4) nach Anspruch 4, wobei die Aussparung auf der Seite des Gehäusesitzes (12) des Zahns (13), der diesem zugeordnet werden kann, durch eine röntgenstrahlendurchlässige Bestrahlungsgehäusewand (54) definiert ist.

6. Vorrichtung (4) nach Anspruch 4 oder 5, wobei die Bestrahlungsgehäusewand (64) in Bezug auf die röntgenstrahlendurchlässige Wand (52) im Wesentlichen flach ist.

7. Vorrichtung (4) nach einem beliebigen der Ansprüche 1 bis 6, wobei die Vorrichtung (4) zwei Bildgebungskammern (56) aufweist, die unter 90 Grad zueinander relativ zu dem Zahn (13) angeordnet sind, um so die Durchführung von zwei Röntgenaufnahmen des Zahns (13) in senkrechten Richtungen relativ zueinander zu ermöglichen, ohne den Zahn (13) bezüglich des Gehäusesitzes (12) verdrehen zu müssen.

8. Vorrichtung (4) nach einem beliebigen der Ansprüche 1 bis 7, wobei die Festsetzungsmittel (20) einen Bund (32) aufweisen, der zur Aufnahme des Zahns (13) geeignet ist.

9. Vorrichtung (4) nach Anspruch 8, wobei dem Bund (32) ein Ring (40) zugeordnet ist, der geeignet ist, um den Zahn (13) an dem Bund (32) in Stellung festzusetzen.

10. Vorrichtung (4) nach Anspruch 9, wobei der Ring (40) aus einem Bikomponenten-Kunststoff-Material für Abformungen hergestellt ist.

11. Vorrichtung (4) nach Anspruch 8, wobei die Festsetzungsmittel (20) Schraubenmittel (44) aufweisen, die dem Bund (32) zugeordnet und geeignet sind, um den Zahn (13) an dem Bund (32) in Stellung festzusetzen.

12. Vorrichtung (4) nach Anspruch 11, wobei die Festsetzungsmittel (20) ein Paar von Laschen (45) aufweisen, die geeignet sind, um den Zahn (13) festzuspannen, um so den Zahn (13) relativ zu dem Bund (32) in Stellung festzusetzen.

13. Vorrichtung (4) nach einem beliebigen der Ansprüche 8 bis 12, wobei der Bund (32) in Bezug auf den Vorrichtungskörper (8) schwenkbar montiert ist, um so die Verdrehung des Zahns (13) relativ zu einer vertikalen Achse (x), die im Wesentlichen parallel zu einer Haupterstreckungsrichtung des Zahns (13) ausgerichtet ist, zu ermöglichen.

14. Vorrichtung (4) nach einem beliebigen der Ansprüche 8 bis 13, wobei der Bund (32) Einkerbungen aufweist, die geeignet sind, um eine elastische Verformung des Bundes (32) beim Schließen relativ zu dem Zahn (13) zu ermöglichen.

15. Vorrichtung (4) nach einem beliebigen der Ansprüche 1 bis 14, wobei die Festsetzungsmittel (20) eine Klemmvorrichtung (46) aufweisen, die mit wenigstens zwei entgegengesetzten Fingern (47) versehen ist, die geeignet sind, um einen Zahn (13), der dazwischen eingefügt ist, festzuspannen.

16. Vorrichtung (4) nach Anspruch 15, wobei die Klemmvor-richtung (46) koaxial zu dem Bund (32) angeordnet ist.

17. Vorrichtung (4) nach Anspruch 15 oder 16, wobei die Klemmvorrichtung (46) vier Finger (47) aufweist, die winkelmäßig zueinander beabstandet angeordnet sind.

18. Vorrichtung (4) nach Anspruch 15, 16 oder 17, wobei die Finger (47) mit einer Hülse (48) durch Vorsehen geeigneter Einkerbungen (49) elastisch verbunden ist.

19. Vorrichtung (4) nach einem beliebigen der Ansprüche 15 bis 18, wobei die Festsetzungsmittel (20) eine Ringmutter (51) aufweisen, die geeignet ist, um auf ein Außengewinde (53) des Bundes (32) aufgeschraubt zu werden, wobei die Ringmutter (51) eine radiale Kompressionswirkung auf die Finger (47) ausübt, während der Bund (32) auf dem Außengewinde (53) aufgeschraubt ist.

20. Vorrichtung (4) nach einem beliebigen der vorhergehenden Ansprüche, wobei der Gehäusesitz (12) durch einen rohrförmigen Körper (16) definiert ist, der sich von einer oberen Wand (36) der Vorrichtung zu einer Basis (17) der Vorrichtung erstreckt.

21. Vorrichtung nach Anspruch 20, die eine Buchse (18) aufweist, die koaxial zu dem rohrförmigen Körper (16) angeordnet ist, um so gemeinsam mit der Außenseitenwand des rohrförmigen Körpers (16) einen kreisringförmigen Sitz (19) zu bilden, der geeignet ist, um Reinigungsfluide des Zahns aufzufangen.

22. Vorrichtung nach Anspruch 21, wobei die Buchse (18) einem Loch (21), der an der Basis (17) der Vorrichtung (4) ausgebildet ist, lösbar zugeordnet ist.

23. Vorrichtung nach Anspruch 22, wobei ein Fixieren der Buchse (18) an dem Loch (21) mittels einer Bayonettkupplung ausgeführt wird.

24. Vorrichtung nach einem beliebigen der Ansprüche 21 bis 23, wobei die Buchse (18) von dem rohrförmigen Körper (16) mechanisch getrennt ist.

25. Vorrichtung nach einem beliebigen der Ansprüche 21 bis 23, wobei die Buchse (18) mit dem rohrförmigen Körper (16) integral ist, so dass, wenn die Buchse (18) herausgenommen wird, der rohrförmige Körper (16) ebenfalls herausgenommen ist.

26. Vorrichtung (4) nach einem beliebigen der vorhergehenden Ansprüche, wobei die elektrischen Verbindungsmittel (24) ein leitfähiges Gel (50) aufweisen, das geeignet ist, um eine elektrische Verbindung zwischen dem Zahn (13) und dem Anschluss (28) herzustellen.

27. Vorrichtung (4) nach Anspruch 26, wobei das Gel (50) den Gehäusesitz (12) wenigstens teilweise füllt und mit dem Anschluss (28) in Kontakt steht, um so den Zahn (13) mit dem Anschluss (28) elektrisch zu verbinden.

28. Vorrichtung (4) nach einem beliebigen der vorhergehenden Ansprüche, wobei eine Messskala an einer oberen Wand (36) des Vorrichtungskörpers vorgesehen ist, um eine exakte Messung der Tiefe der Kanäle des Zahns (13) zu ermöglichen.

29. Verfahren zum endodontischen Training, das die Schritte aufweist:
- Positionieren eines Zahns (13) auf einer endodontischen Trainingsvorrichtung (4) gemäß einem beliebigen der Ansprüche 1 bis 28,
Verbinden einer ersten Anschlussklemme mit einer Formgebungsvorrichtung für einen Kanal (14) des Zahns (13) und einer zweiten Anschlussklemme mit dem elektrischen Anschluss (28),
wenigstens teilweises Füllen des Gehäusesitzes (12) des Zahns (13) mit einem elektrischen Verbindungsmittel (24).

30. Verfahren zum endodontischen Training nach Anspruch 29, das die Schritte aufweist:
Einsetzen des Bildgebungsmediums (60, 62) in die wenigstens eine Bildgebungskammer (56),
Anwenden einer Strahlungsquelle in der Nähe der wenigstens einen röntgenstrahlendurchlässigen Wand (52),
Bestrahlen des Zahns (13) auf der Seite der wenigstens einen röntgenstrahlendurchlässigen Wand (52), um so eine Röntgenaufnahme intraoral auf dem Bildgebungsmedium (60, 62) zu erhalten.

31. Verfahren zum endodontischen Training nach Anspruch 29 oder 30, das die Schritte aufweist:
Verdrehen des Zahns (13) relativ zu dem Gehäusesitz (12) und Durchführen mehrerer Röntgenaufnahmen des Zahns (13) relativ zu verschiedenen Perspektiven.

32. Verfahren zum endodontischen Training nach Anspruch 29 oder 30, das den Schritt des Durchführens von zwei Röntgenaufnahmen aufweist, ohne dass es erforderlich ist, den Zahn abzumontieren oder zu verdrehen, indem eine Strahlungsquelle in der Nähe von zwei unterschiedlichen röntgenstrahlendurchlässigen Wänden (52) angewandt wird.

33. Verfahren zum endodontischen Training nach einem beliebigen der Ansprüche 29 bis 32, das die Schritte aufweist:
Durchführen der Formung und Reinigung eines Kanals (14) des Zahns (13) mittels eines speziellen endodontischen Werkzeugs,
Durchführen eines Plombierens wenigstens eines Kanals (14) des zuvor entleerten Zahns (13) mit speziellen Materialien.

## Revendications

1. Dispositif d'entraînement endodontique (4) comprenant un corps (8) de dispositif enfermant un siège d'accueil (12) pour une dent (13)
un moyen (20) destiné à bloquer la dent (13) par rapport au siège d'accueil (12)
un moyen de connexion électrique (24) entre la dent (13) et une borne électrique (28)
**caractérisé en ce que**
le siège d'accueil (12) de la dent (13) est pourvu d'au moins une paroi radio-transparente (52) et
le dispositif (4) comprend au moins une chambre de formation d'image (56) qui est agencée, par rapport à la dent (13), à l'opposé de ladite paroi radio-transparente (52), de manière à pouvoir imprimer une radiographie de la dent (13) sur des supports de formation d'image (60) logés dans ladite au moins une chambre de formation d'image (56) en exposant le dispositif (4) à des rayons sur le côté paroi radio-transparente (52).

2. Dispositif (4) selon la revendication 1, dans lequel ladite au moins une paroi radio-transparente (52) du siège d'accueil (12) est une paroi plate.

3. Dispositif (4) selon la revendication 2, dans lequel ladite paroi radio-transparente (52) est une paroi extérieure du corps (8) de dispositif.

4. Dispositif (4) selon la revendication 1, 2 ou 3, dans lequel la au moins une chambre de formation d'image (56) comprend un renfoncement approprié pour accueillir les supports de formation d'image (60, 62) selon un couplage de forme.

5. Dispositif (4) selon la revendication 4, dans lequel ledit renfoncement est délimité, sur le côté du siège d'accueil (12) de la dent (13) qui peut lui être associée, par un panneau rayonnant radio-transparent (64).

6. Dispositif (4) selon la revendication 4 ou 5, dans lequel ledit panneau rayonnant (64) est sensiblement plat par rapport à ladite paroi radio-transparente (52).

7. Dispositif (4) selon l'une quelconque des revendications 1 à 6, dans lequel le dispositif (4) comprend deux chambres de formation d'image (56) qui sont agencées à 90 degrés l'une de l'autre par rapport à la dent (13), de manière à permettre la réalisation de deux radiographies de la dent (13) dans des directions perpendiculaires l'une à l'autre sans être obligé de faire tourner la dent (13) par rapport au siège d'accueil (12).

8. Dispositif (4) selon l'une quelconque des revendications 1 à 7, dans lequel le moyen de blocage (20) comprend un collier (32) qui est approprié pour recevoir la dent (13).

9. Dispositif (4) selon la revendication 8, dans lequel un anneau (40) est associé audit collier (32), qui est approprié pour bloquer la dent (13) en position sur le collier (32).

10. Dispositif (4) selon la revendication 9, dans lequel ledit anneau (40) est constitué d'une matière plastique à deux composants pour impressions.

11. Dispositif (4) selon la revendication 8, dans lequel le moyen de blocage (20) comprend un moyen formant vis (44), associé audit collier (32) et approprié pour bloquer la dent (13) en position sur le collier (32).

12. Dispositif (4) selon la revendication 11, dans lequel ledit moyen de blocage (20) comprend une paire de pattes (45) appropriées pour serrer la dent (13) de manière à bloquer la dent (13) en position par rapport au collier (32).

13. Dispositif (4) selon l'une quelconque des revendications 8 à 12, dans lequel ledit collier (32) est monté pivotant par rapport au corps (8) de dispositif, de manière à permettre la rotation de la dent (13) par rapport à un axe vertical (x) qui est sensiblement dirigé parallèlement à une direction principale d'extension de la dent (13).

14. Dispositif (4) selon l'une quelconque des revendications 8 à 13, dans lequel ledit collier (32) comprend des encoches appropriées pour permettre une déformation élastique du collier (32) tout en se refermant par rapport à la dent (13).

15. Dispositif (4) selon l'une quelconque des revendications 1 à 14, dans lequel le moyen de blocage (20) comprend un dispositif de serrage (46) pourvu d'au moins deux doigts opposés (47) appropriés pour serrer une dent (13) intercalée entre eux.

16. Dispositif (4) selon la revendication 15, dans lequel ledit dispositif de serrage (46) est agencé de manière coaxiale par rapport audit collier (32).

17. Dispositif (4) selon la revendication 15 ou 16, dans lequel le dispositif de serrage (46) comprend quatre doigts (47) qui sont agencés de façon angulairement espacés les uns des autres.

18. Dispositif (4) selon la revendication 15, 16 ou 17, dans lequel lesdits doigts (47) sont reliés élastiquement à un manchon (48) en utilisant des encoches (49) appropriées.

19. Dispositif (4) selon l'une quelconque des revendications 15 à 18, dans lequel le moyen de blocage (20) comprend un écrou à oeil (51) approprié pour être vissé sur un filetage extérieur (53) dudit collier (32), ledit écrou à oeil (51) appliquant une action de compression radiale sur les doigts (47) tandis que le collier (32) est vissé sur ledit filetage extérieur (53).

20. Dispositif (4) selon l'une quelconque des revendications précédentes, dans lequel ledit siège d'accueil (12) est délimité par un corps tubulaire (16), s'étendant depuis une paroi supérieure (36) du dispositif jusqu'à une base (17) du dispositif.

21. Dispositif selon la revendication 20, comprenant une douille (18), qui est agencée coaxiale par rapport audit corps tubulaire (16), de manière à former avec la paroi latérale extérieure du corps tubulaire (16) un siège annulaire (19), qui est approprié pour collecter des fluides de nettoyage de la dent.

22. Dispositif selon la revendication 21, dans lequel la douille (18) est associée de façon amovible à un trou (21) formé sur la base (17) du dispositif (4).

23. Dispositif selon la revendication 22, dans lequel la fixation de la douille (18) sur le trou (21) est réalisée à l'aide d'un couplage à baïonnette.

24. Dispositif selon l'une quelconque des revendications 21 à 23, dans lequel la douille (18) est mécaniquement séparée du corps tubulaire (16).

25. Dispositif selon l'une quelconque des revendications 21 à 23, dans lequel la douille (18) fait partie intégrante du corps tubulaire (16) de sorte que, lorsque la douille (18) est retirée, le corps tubulaire (16) soit également retiré.

26. Dispositif (4) selon l'une quelconque des revendications précédentes, dans lequel ledit moyen de connexion électrique (24) comprend un gel conducteur (50) approprié pour réaliser une connexion électrique entre la dent (13) et la borne (28).

27. Dispositif (4) selon la revendication 26, dans lequel ledit gel (50) remplit au moins partiellement le siège d'accueil (12) et est en contact avec ladite borne (28), de manière à connecter électriquement la dent (13) à la borne (28).

28. Dispositif (4) selon l'une quelconque des revendications précédentes, dans lequel une échelle de mesure (68) est prévue au niveau d'une paroi supérieure (36) du corps de dispositif, afin de permettre la mesure exacte de la profondeur des canaux de la dent (13).

29. Procédé d'entraînement endodontique comprenant les étapes consistant à :
- mettre en place une dent (13) sur un dispositif d'entraînement endodontique (4) selon l'une quelconque des revendications 1 à 28,
connecter une première pince de connexion à un dispositif de façonnage pour un canal (14) de la dent (13) et une seconde pince de connexion à ladite borne électrique (28),
remplir au moins partiellement le siège d'accueil (12) de la dent (13) à l'aide d'un moyen de connexion électrique (24).

30. Procédé d'entraînement endodontique selon la revendication 29, comprenant les étapes consistant à:
insérer les supports de formation d'image (60, 62) dans ladite au moins une chambre de formation d'image (56) appliquer une source de rayonnement à proximité de ladite au moins une paroi radio-transparente (52) exposer à des rayons la dent (13) sur le côté de ladite au moins une paroi radio-transparente (52) de manière à obtenir une radiographie intrabuccale sur les supports de formation d'image (60, 62).

31. Procédé d'entraînement endodontique selon la revendication 29 ou 30, comprenant l'étape consistant à:
faire tourner la dent (13) par rapport au siège d'accueil (12) et réaliser une pluralité de radiographies de la dent (13) par rapport aux différents points de vue.

32. Procédé d'entraînement endodontique selon la revendication 29 ou 30, comprenant l'étape consistant à réaliser deux radiographies sans être obligé de démonter ou de faire tourner la dent, en appliquant une source de rayonnement à proximité de deux parois radio-transparentes (52) différentes.

33. Procédé d'entraînement endodontique selon l'une quelconque des revendications 29 à 32, comprenant les étapes consistant à:
réaliser le façonnage et le nettoyage d'un canal (14) de la dent (13) à l'aide d'un outil endodontique spécifique,
réaliser une obturation, à l'aide de matériaux spécifiques, d'au moins un canal (14) de la dent (13) auparavant vidée.
